# EUROPÄISCHE PATENTSCHRIFT

(11) **EP 1 769 984 B1**
(45) Veröffentlichungstag und Bekanntmachung des Hinweises auf die Patenterteilung: **09.01.2008**
(21) Anmeldenummer: 05021505.2
(22) Anmeldetag: 30.09.2005
(51) Int. Cl.: B60R 22/46

(54) **Sicherheitsgurtvorrichtung**
Seat belt device
Dispositif de ceinture de sécurité

(43) Veröffentlichungstag der Anmeldung: 04.04.2007
(73) Patentinhaber: Delphi Technologies, Inc., Troy, MI 48007 (US)
(72) Erfinder: Adomeit, Julius, 14195 Berlin (DE); Marshall, Stephen, 13357 Berlin (DE)
(74) Vertreter: Manitz, Finsterwald & Partner GbR

(56) Entgegenhaltungen:
- WO-A-20/05005211
- DE-A1- 10 025 031
- US-A- 4 579 294
- US-A- 5 201 385

## Beschreibung

Die vorliegende Erfindung betrifft eine Sicherheitsgurtvorrichtung nach dem Oberbegriff des Anspruchs 1. Eine solche Vorrichtung ist aus der WO-A-2005/005211 bekannt. Bei dieser bekannten Sicherheitsgurtvorrichtung dient ein Elektromotor in Verbindung mit einer Feder dazu, Gurtlose zu entfernen, wenn die Fahrzeugsensorik anzeigt, dass in Kürze ein Unfall zu erwarten sein könnte (Pre-Crash). Sobald ein Pre-Crash-Signal vorliegt, kann die zuvor von dem Elektromotor gespannte Feder zusammen mit dem Elektromotor entspannt werden, wobei gleichzeitig eine Kupplung dafür sorgt, dass auf die Gurtspule ein durch die Feder und den Elektromotor erzeugtes Drehmoment in Aufwickelrichtung aufgebracht wird. Falls sich jedoch ein Unfall ereignet, ohne dass die Pre-Crash-Sensorik ausreichend Zeit hatte, den Unfall zu erkennen, erfolgt die Gurtstraffung üblicherweise durch einen herkömmlichen, pyrotechnischen Gurtstraffer.

Es ist die Aufgabe der vorliegenden Erfindung, eine Sicherheitsgurtvorrichtung der eingangs genannten Art zu schaffen, mit der die Kosten der in einem Fahrzeug vorhandenen Sicherheitstechnik gesenkt werden können.

Die Lösung dieser Aufgabe erfolgt durch die Merkmale des Anspruchs 1 und insbesondere dadurch, dass eine Schnellauslöseeinrichtung vorgesehen ist, die ein Abkoppeln des Elektromotors von dem Energiespeicher und ein Antreiben des Aufrollers durch Leeren des Energiespeichers ermöglicht.

Die erfindungsgemäße Sicherheitsgurtvorrichtung kann einerseits auf herkömmliche Art und Weise betrieben werden, d.h. dafür sorgen, dass nach Vorliegen eines Pre-Crash-Signals der Gurt in Aufwickelrichtung bewegt wird, um Gurtlose zu entfernen. Neben dieser reversiblen Betriebsart ist jedoch erfindungsgemäß durch die Schnellauslöseeinrichtung sichergestellt, dass auch dann ein Gurtstraffen erfolgt, wenn kein Pre-Crash-Signal vorliegt. In diesem Fall wird der Kraftfluss zwischen dem Elektromotor und dem Energiespeicher getrennt, so dass durch Leeren des Energiespeichers ein Antreiben des Aufrollers in Aufwickelrichtung möglich ist. Auf diese Weise ist es möglich, auf herkömmliche, pyrotechnische Gurtstraffer gänzlich zu verzichten, wodurch die Kosten der in dem Fahrzeug vorhandenen Sicherheitstechnik erheblich gesenkt werden können.

Vorteilhafte Ausführungsformen der Erfindung sind in der Beschreibung, der Zeichnung sowie den Unteransprüchen beschrieben.

Nach einer ersten vorteilhaften Ausführungsform ist die Sicherheitsgurtvorrichtung im Speichermodus und im Aufwickelmodus reversibel betreibbar, wohingegen die Schnellauslöseeinrichtung ausschließlich irreversibel betreibbar ist. Bei dieser Ausführungsform ist sichergestellt, dass die Schnellauslöseeinrichtung in kürzester Zeit ausgelöst werden kann, beispielsweise wenn eine pyrotechnische Einheit eingesetzt wird. Eine solche Einheit kann jedoch weitaus kostengünstiger hergestellt werden, als dies bei einem herkömmlichen pyrotechnischen Gurtstraffer der Fall ist. Mit anderen Worten ist es vorteilhaft, wenn nur die Schnellauslöseeinrichtung eine pyrotechnische Zündeinheit aufweist, wobei die Sicherheitsgurtvorrichtung ansonsten keine weitere pyrotechnische Zündeinheit aufweist bzw. eine solche Zündeinheit nicht an den Komponenten des Sicherheitsgurtsystems vorgesehen ist.

Nach einer vorteilhaften Ausführungsform kann die Schnellauslöseeinrichtung ein Zahnrad aufweisen, dessen Zähne bzw. dessen Zahnring ganz oder in Segmenten mit der pyrotechnischen Zündeinheit absprengbar sind. Hierdurch kann der Bauraum der Sicherheitsgurtvorrichtung äußerst klein gehalten werden.

Vorteilhaft kann es ferner sein, wenn zwischen dem Zahnrad und dem Energiespeicher eine Schutzabdeckung vorgesehen ist, da in diesem Fall bei Absprengen der Zähne bzw. des Zahnrings sichergestellt ist, dass der Energiespeicher, beispielsweise eine Spiralfeder, unversehrt bleibt.

Nach einer weiteren vorteilhaften Ausführungsform kann die Schnellauslöseeinrichtung ein mit der pyrotechnischen Zündeinheit ausrückbares Zahnrad aufweisen, um den Kraftfluss zwischen Motor und Energiespeicher zu unterbrechen. Alternativ oder zusätzlich kann ein mit der pyrotechnischen Zündeinheit ausrückbares Verbindungselement vorgesehen werden.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine Schnittansicht einer ersten Ausführungsform,
- Fig. 1A: eine vergrößerte Detailansicht von Fig. 1,
- Fig. 2: eine Schnittansicht einer weiteren Ausführungsform,
- Fig. 2A: eine Detailansicht von Fig. 2,

- Fig. 3: eine Schnittansicht einer dritten Ausführungsform, und
- Fig. 3A und 3B: vergrößerte Detailansichten der Ausführungsform von Fig. 3.

Die nachfolgenden Ausführungsbeispiele sind grundsätzlich aufgebaut wie die Sicherheitsgurtvorrichtung, die in der W02005/005211 A1 offenbart ist und diese Offenbarung wird durch Bezugnahme ausdrücklich zum Gegenstand der hier vorliegenden Anmeldung gemacht. Zur Vermeidung von Wiederholungen werden in der vorliegenden Anmeldung nicht nochmals sämtliche Details dieser bekannten Sicherheitsgurtvorrichtung beschrieben.

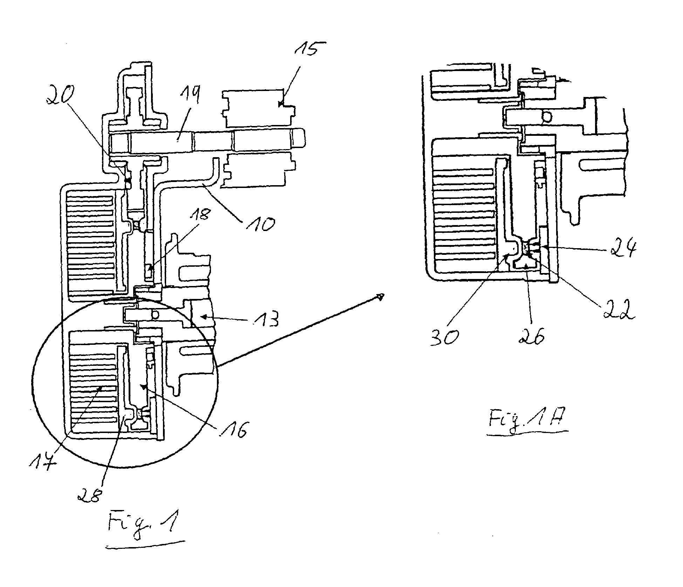

Die in den Fig. 1 und 1A nur teilweise dargestellte erste Ausführungsform einer Sicherheitsgurtvorrichtung für Kraftfahrzeuge weist einen Gurtaufroller 13 auf, auf den ein nicht dargestellter Sicherheitsgurt aufgerollt ist. Mit dem Gurtaufroller 13 verbunden ist eine übliche Mechanik, um im Falle rascher negativer Beschleunigungen den Gurtaufroller zu blockieren. Diese Mechanik ist in den Figuren nicht dargestellt und hinlänglich bekannt.

Der Gurtaufroller 13 ist in einem Rahmen 10 frei drehbar gelagert, wobei ein koaxial zu der Achse des Gurtaufrollers 13 drehbares Zahnrad 16 über eine Kupplung 18 mit dem Gurtaufroller 13 koppelbar ist. Bei Drehen des Zahnrades 16 entgegen der Aufrollrichtung spannt dieses einen mechanischen Energiespeicher in Form einer Spiralfeder 17, wobei das zum Spannen erforderliche Drehmoment durch einen Elektromotor 15 aufgebracht wird, der über eine Welle 19 ein weiteres Zahnrad 20 antreibt und der in den Figuren nur stark vereinfacht dargestellt ist. Mit Hilfe des Motors 15 kann somit die Feder 17 gespannt werden und bei Vorliegen eines Pre-Crash-Signals wird die Drehrichtung des Motors 15 umgedreht, wobei bei der sich anschließenden Drehbewegung des Zahnrads 16 die Kupplung 18 selbsttätig einkuppelt, so dass der Gurtaufroller 13 in Aufwickelrichtung bewegt wird, wobei das erforderliche Drehmoment von dem Elektromotor 15 und der Feder 17 aufgebracht wird. Das Spannen der Feder 17 mit Hilfe des Elektromotors 15 kann beispielsweise kurz nach Anlassen des Fahrzeugs erfolgen.

Wie insbesondere Fig. 1A zeigt, ist im Bereich der Zähne des Zahnrades 16 an dessen Außenumfang eine pyrotechnische Zündeinheit 22 vorgesehen, die als Schnellauslöseeinrichtung dient, um den Elektromotor 15 von der Feder 17 abzukoppeln, bzw. den Kraftfluss zwischen Elektromotor und Feder zu unterbrechen, um den Aufroller 13 in Aufwickelrichtung anzutreiben, indem die Feder 17 entspannt wird. Falls die Fahrzeugsensorik einen plötzlichen Unfall meldet, ohne dass vorher die Pre-Crash-Sensorik angesprochen hätte, wird die pyrotechnische Zündeinheit 22 über eine Steuerelektronik 24 gezündet, so dass die Zähne 26 des Zahnrades 16 abgetrennt werden, woraufhin sich das nicht mehr durch den Elektromotor 15 gehaltene Zahnrad aufgrund des Drehmomentes der gespannten Feder 17 in Aufwickelrichtung zu drehen beginnt. Durch die automatisch eingreifende Kupplung 18 wird in diesem Moment sichergestellt, dass das Drehmoment der Feder 17 auf den Gurtaufroller 13 übertragen wird und sich dieser in Gurtaufwickelrichtung dreht. Die Federkraft für die Feder 17 kann so gewählt werden, dass sich eine Kraft am Gurtband im Bereich von etwa 200 bis 400 N ergibt. Bevorzugt wirkt die Zündeinheit so, dass die Zähne als vollständiger oder segmentierter Zahnring abgetrennt werden.

Um die Feder 17 bei Zünden der pyrotechnischen Zündeinheit 22 zu schützen, ist zwischen der Feder 17 und dem Zahnrad 16 eine Schutzabdeckung 28 vorgesehen, die sich über die gesamte Fläche der (entspannten) Spiralfeder 17 erstreckt und die im Bereich der angrenzenden pyrotechnischen Zündeinheit 22 eine Verstärkungsrippe 30 aufweist. Die Verstärkungsrippe ist umlaufend ausgebildet und erstreckt sich in eine Ringnut des Zahnrades 16 hinein, so dass die Verstärkungsrippe nach Absprengen des Zahnringes 26 auch dazu dient, diesen außer Eingriff mit dem Zahnrad 16 zu halten, damit sich dieses frei drehen kann.

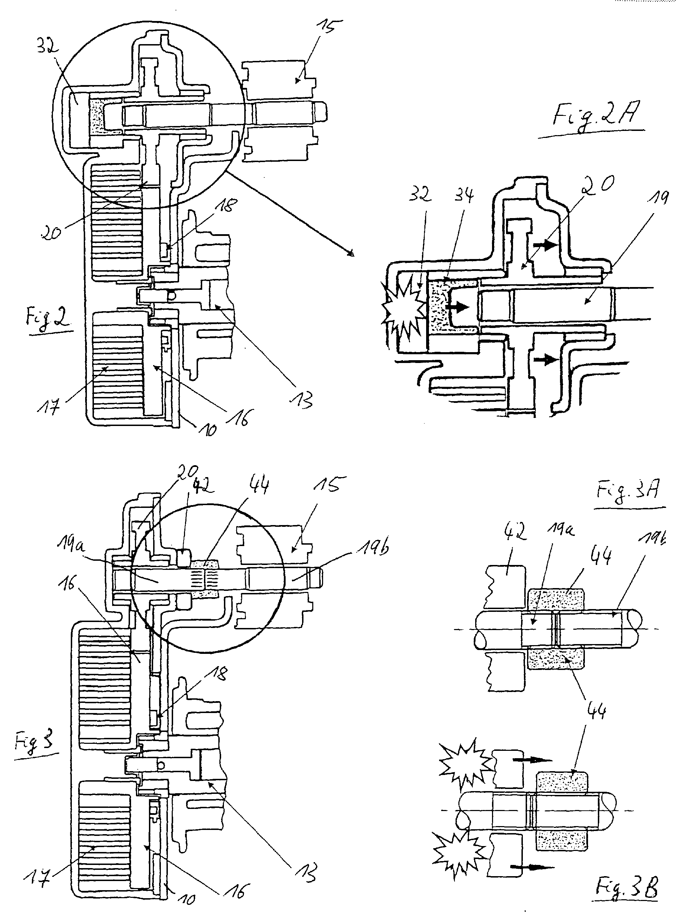

Die in den Fig. 2 und 2A dargestellte Ausführungsform unterscheidet sich in der Art der Schnellauslöseeinrichtung. Für die übrigen Bauteile sind jedoch die gleichen Bezugszeichen verwendet und es wird auf die nochmalige Beschreibung dieser Bauteile verzichtet.

Bei der Ausführungsform von Fig. 2 ist zum Unterbrechen des Kraftflusses zwischen dem Elektromotor 15 und der Feder 17 eine pyrotechnische Zündeinheit 32 vorgesehen, mit der ein hülsenförmiges Element 34 in Richtung der in Fig. 2A dargestellten Pfeile bewegt werden kann. Dieses hülsenförmige Element 34 drückt in diesem Fall das Zahnrad 20, das verschiebbar auf der Welle 19 gelagert ist, in Richtung des Elektromotors 15, bis kein Zahneingriff mehr zwischen dem Zahnrad 20 und dem Zahnrad 16 vorliegt. Mit anderen Worten wird das Zahnrad 20 durch die pyrotechnische Zündeinheit 32 ausgerückt.

Bei der in den Fig. 3 und 3A dargestellten Ausführungsform ist die Schnellauslöseeinrichtung im Bereich der Welle vorgesehen, die den Elektromotor 15 mit dem Zahnrad 20 verbindet. Bei diesem Ausführungsbeispiel ist diese Welle zweiteilig ausgebildet, wobei ein keilwellenartig geformter Verbindungsring 44 die beiden Wellenstummel 19a und 19b miteinander verbindet. Fig. 3 zeigt den Normalzustand, bei dem der Elektromotor 15 mit der Feder 17 drehfest gekoppelt ist, da der Verbindungsring 44 die beiden Wellenstummel 19a und 19b koppelt. Wenn jedoch die Schnellauslöseeinrichtung aktiviert wird, wird eine pyrotechnische Zündeinheit 42 gezündet, die den Verbindungsring 44 in Richtung des Motors 15 verschiebt, wodurch die drehfeste Verbindung zwischen den beiden Wellenstummeln 19a und 19b aufgehoben ist, so dass sich die zuvor gespannte Feder 17 zusammen mit dem Zahnrad 16 in Aufwickelrichtung drehen kann, wobei mit Hilfe der Kupplung 18 der Gurtaufroller 13 in Aufwickelrichtung gedreht wird.

### Bezugszeichenliste

- 10: Rahmen
- 13: Gurtaufroller
- 15: Elektromotor
- 16: Zahnrad
- 17: Spiralfeder
- 18: Kupplung
- 19: Welle
- 19a, 19b: Wellenstummel
- 20: Zahnrad
- 22: pyrotechnische Zündeinheit
- 24: Steuerelektronik
- 26: Zahnring
- 28: Schutzabdeckung
- 30: Verstärkungsrippe
- 32: pyrotechnische Zündeinheit
- 34: hülsenförmiges Element
- 42: pyrotechnische Zündeinheit
- 44: Verbindungsring

## Patentansprüche

1. Sicherheitsgurtvorrichtung für Kraftfahrzeuge mit einem Gurtaufroller (13) und einem Antrieb (15, 17) für den Aufroller (13),
wobei der Antrieb einen Elektromotor (15) und einen mit dem Motor (15) gekoppelten mechanischen Energiespeicher (17) umfasst, und
wobei der Motor (15) in Abhängigkeit von einem Ansteuersignal wahlweise entweder in einem vom Aufroller (13) entkoppelten Speichermodus zum Füllen des Energiespeichers (17) oder in einem Aufwickelmodus betreibbar ist, in welchem der Motor (15) mit dem Aufroller (13) gekoppelt und der Aufroller (13) durch ein von dem Motor (15) und dem zuvor gefüllten Energiespeicher (17) gemeinsam aufgebrachtes Moment in Aufwickelrichtung angetrieben ist,
**dadurch gekennzeichnet,**
**dass** eine Schnellauslöseeinrichtung vorgesehen ist, die ein Abkoppeln des Elektromotors (15) von dem Energiespeicher (17) und ein Antreiben des Aufrollers (13) durch Leeren des Energiespeichers (17) ermöglicht.

2. Sicherheitsgurtvorrichtung nach Anspruch 1,
**dadurch gekennzeichnet,**
**dass** diese im Speichermodus und im Aufwickelmodus reversibel betreibbar ist und dass die Schnellauslöseeinrichtung irreversibel betreibbar ist.

3. Sicherheitsgurtvorrichtung nach Anspruch 1 oder 2,
**dadurch gekennzeichnet,**
**dass** die Schnellauslöseeinrichtung eine pyrotechnische Zündeinheit (22, 32, 42) aufweist, wobei die Sicherheitsgurtvorrichtung vorzugsweise keine weitere pyrotechnische Zündeinheit aufweist.

4. Sicherheitsgurtvorrichtung nach Anspruch 3,
**dadurch gekennzeichnet,**
die Schnellauslöseeinrichtung ein Zahnrad (16) aufweist, dessen Zähne mit der pyrotechnischen Zündeinheit (22), insbesondere als vollständiger oder segmentierter Zahnring (26) absprengbar sind.

5. Sicherheitsgurtvorrichtung nach Anspruch 4,
**dadurch gekennzeichnet,**
**dass** zwischen dem Zahnrad (16) und dem Energiespeicher (17) eine Schutzabdeckung (28) vorgesehen ist.

6. Sicherheitsgurtvorrichtung nach Anspruch 3,
**dadurch gekennzeichnet,**
**dass** die Schnellauslöseeinrichtung ein mit der pyrotechnischen Zündeinheit (32) ausrückbares Zahnrad (20) aufweist.

7. Sicherheitsgurtvorrichtung nach Anspruch 3,
**dadurch gekennzeichnet,**
**dass** die Schnellauslöseeinrichtung ein mit der pyrotechnischen Zündeinheit (42) ausrückbares Verbindungselement (44) aufweist.

## Claims

1. A seat belt apparatus for motor vehicles having a belt retractor (13) and a drive (15, 17) for the retractor (13),
wherein the drive includes an electric motor (15) and a mechanical energy store (17) coupled to the motor (15), and wherein the motor (15) can be operated selectively in dependence on a control signal either in a storage mode decoupled from the retractor (13) to fill the energy store (17) or in a wind-up mode in which the motor (15) is coupled to the retractor (13) and the retractor (13) is driven in the wind-up direction by a torque applied jointly by the motor (15) and the previously filled energy store (17),
**characterized in that**
a fast release device is provided which permits a decoupling of the electric motor (15) from the energy store (17) and a driving of the retractor (13) by emptying the energy store (17).

2. A seat belt apparatus in accordance with claim 1, **characterized in that** it can be operated reversibly in the memory mode and in the wind-up mode; and **in that** the fast release device can be operated irreversibly.

3. A seat belt apparatus in accordance with claim 1 or claim 2, **characterized in that** the fast release device has a pyrotechnic ignition unit (22, 32, 42), with the seat belt apparatus preferably not having any further pyrotechnic ignition unit.

4. A seat belt apparatus in accordance with claim 3, **characterized in that** the fast release device has a toothed wheel (16) whose teeth can be cracked off, in particular as a complete or segmented toothed ring (26), using the pyrotechnic ignition unit (22).

5. A seat belt apparatus in accordance with claim 4, **characterized in that** a protective cover (28) is provided between the toothed wheel (16) and the energy store (17).

6. A seat belt apparatus in accordance with claim 3, **characterized in that** the fast release device has a toothed wheel (20) which can be disengaged using the pyrotechnic ignition unit (32).

7. A seat belt apparatus in accordance with claim 3, **characterized in that** the fast release device has a connection element (44) which can be disengaged using the pyrotechnic ignition unit (42).

## Revendications

1. Dispositif de ceinture de sécurité pour véhicules automobiles, comprenant un enrouleur (13) de ceinture de sécurité et un entraînement (15, 17) pour l'enrouleur (13), l'entraînement comprenant un moteur électrique (15) et un accumulateur d'énergie mécanique (17) accouplé au moteur (15), et le moteur (15) pouvant être actionné, au choix, en fonction d'un signal de commande, soit dans un mode d'accumulation, découplé de l'enrouleur (13), permettant de charger l'accumulateur d'énergie (17), soit dans un mode d'enroulement, dans lequel le moteur (15) est couplé à l'enrouleur (13), et l'enrouleur (13) est entraîné dans le sens de l'enroulement grâce à couple appliqué conjointement par le moteur (15) et par l'accumulateur d'énergie (17) préalablement chargé,
**caractérisé en ce qu'**un dispositif de déclenchement rapide est prévu, qui permet un débrayage du moteur électrique (15) de l'accumulateur d'énergie (17), et permet un entraînement de l'enrouleur (13) grâce à un déchargement de l'accumulateur d'énergie (17).

2. Dispositif de ceinture de sécurité selon la revendication 1, **caractérisé en ce qu'**en mode d'accumulation et en mode d'enroulement, ce dispositif peut être actionné de façon réversible, et que le dispositif de déclenchement rapide peut être actionné de façon irréversible.

3. Dispositif de ceinture de sécurité selon la revendication 1 ou 2, **caractérisé en ce que** le dispositif de déclenchement rapide comporte une unité d'amorce pyrotechnique (22, 32, 42), le dispositif de ceinture de sécurité ne comprenant de préférence aucune autre unité d'amorce pyrotechnique.

4. Dispositif de ceinture de sécurité selon la revendication 3, **caractérisé en ce que** le dispositif de déclenchement rapide comprend une roue dentée (16) dont les dents, notamment sous forme d'une couronne dentée intégrale ou segmentée (26), peuvent être détachées par explosion au moyen de l'unité d'amorce pyrotechnique (22).

5. Dispositif de ceinture de sécurité selon la revendication 4, **caractérisé en ce qu'**une paroi de protection (28) est prévue entre la roue dentée (16) et l'accumulateur d'énergie (17).

6. Dispositif de ceinture de sécurité selon la revendication 3, **caractérisé en ce que** le dispositif de déclenchement rapide comprend une roue dentée (20) pouvant être désengagée au moyen de l'unité d'amorce pyrotechnique (32).

7. Dispositif de ceinture de sécurité selon la revendication 3, **caractérisé en ce que** le dispositif de déclenchement rapide comprend un élément d'accouplement (44) pouvant être désengagé au moyen de l'unité d'amorce pyrotechnique (42).
